# EUROPEAN PATENT APPLICATION

(11) **EP 3 367 071 A1**
(43) Date of publication of application: **29.08.2018**
(21) Application number: 16840870.6
(22) Date of filing: 29.07.2016
(51) Int. Cl.: G01F 1/10, B05D 1/04

(54) **METHOD FOR TREATING TOOLS THAT MAY BE EXPOSED TO RADIOACTIVE PARTICLES AND APPARATUS FOR IMPLEMENTING SAME**

(30) Priority: 02.09.2015 ES 201531261
(71) Applicant: Pedro Monzonis, José Antonio, 12413 Almedijar (ES)
(72) Inventor: Pedro Monzonis, José Antonio, 12413 Almedijar (ES)
(74) Representative: Polo Montañes, Carlos
(86) International application number: PCT/ES2016/070585
(87) International publication number: WO 2017/037314

(57) **Abstract**

The method consists of coating the tool, piece or equipment with a coating based on polymeric nanomaterials with ultraporous fibril structures capable of attracting and fixing the radioactive particles to which they may be exposed between the fibers and pores of its structure. Although there are different techniques for applying this coating, it is preferable to choose electro-spinning, blow-spinning or a combination of both, for which the installation includes a booth (1), compressed air equipment (5) with its corresponding pressure regulator (6), which is connected in parallel through an injector or diffuser nozzle (3) with an injection pump (8), a collector (2) on which the tool is placed and a high voltage source (9).

## Description

### OBJECT OF THE INVENTION

The present invention refers to a procedure for the treatment of tools and other manipulable objects or equipment susceptible to contamination by radioactive particles.

The object of the invention is to provide a method by which the tools or elements are coated with a thin film of polymeric material, which will subsequently be used in equipment maintenance work or in areas with risk of removable contamination caused by the presence of radioactive particles. The main function of this coating formed by micro- and/or nanofibers is to attract and fix in its structure the removable radioactive particles that can be found in the hands of the operator or in the equipment that he manipulates when he is manipulating these tools. This means that free particles are no longer a risk due to removable contamination but are now part of the material they have contaminated. The main advantages of permanently fixing radioactive particles in this coating are: reducing the risk of contamination of the operator and the dispersion of contamination, the ease of decontaminating the tool when removing the layer that surrounds it and the economic benefits obtained by reducing the volume of radioactive waste generated, allowing the reuse of these tools and their decontamination.

The invention also affects equipment designed to carry out this coating.

Consequently, the invention therefore falls within the scope of PPE (Personal Protective Equipment) and more specifically the equipment for preventing radiological risks.

### BACKGROUND OF THE INVENTION

Thin films are used in microelectronics as conductors, capacitors and resistors among others. They are also widely used as optical coatings on lenses to reduce the amount of light reflected from the lens surface and to protect them. Metal thin films have long been used as protective metal coatings; they are usually deposited from solutions using electrical currents, such as silver plating and chrome plating. Also, the surfaces of metal tools are covered with thin ceramic films to increase their hardness.

The term thin film does not have a precise definition. In general terms, it refers to films with a thickness ranging from 0.1 um to about 300 um, and it usually does not apply coatings such as paints or varnishes, which are usually much thicker. For a thin film to be useful, it must have all or almost all of the following properties: (a) it must be chemically stable in the environment in which it will be used; it must adhere well to the surface it covers (the substrate); (c) it must have a uniform thickness; (d) it must be chemically pure or have a controlled chemical composition; and (e) it must have a low density of imperfections. In addition to these general features, special properties may be required for certain applications. For example, the film may have to be insulating or semiconducting, or have special optical or magnetic properties.

There is a considerable interest in the development of new techniques for the prevention of occupational risks that increase safety measures in work carried out in environments with removable pollution risk.

A great variety of safety measures are used to reduce the dispersion of pollution in nuclear power plants, the most common being the isolation of areas with removable contamination and the use of the areas of passage, which are as follows however, the tools used during these works may leave the contaminated area carrying free isotopes that may be released from its surface, generating the risk of contamination dispersion. This risk is maintained until the tools are decontaminated or discarded.

A wide variety of safety measures are used to reduce the risk of contamination of exposed workers, with the most common being the use of PPE such as latex gloves that protect the operator from direct contact with radioactive particles. These particles are usually released and very easily contaminate any object such as the worker or the tool he or she is handling. There is a risk of contamination of people caused by the radioactive particles carried by the tools, remaining present until the tool is decontaminated or discarded.

A wide variety of measures are used to avoid contamination of the tools, with the most common being the use of tools whose parts are made up of smooth surface materials that are easy to decontaminate, the prohibition of the entry into contaminated areas of easily contaminable porous materials such as wood from the handle of a hammer or the coating of these parts with tape that protects the tool from contact with radioactive particles. Contaminated tools are usually reused and decontaminated until they are disposed of when they emit a certain dose of radiation due to the radioactive particles they accumulate, this is the case of tools forming part of the volume of radioactive waste generated in a nuclear power plant.

A great variety of techniques are used for the decontamination of the tool, the most commonly used is manual cleaning with rags and solvents. Decontamination techniques generate a large volume of radioactive waste. Currently to reduce this volume the rags and waste generated during decontamination are compressed, then they are stuffed and permanently stored as low or intermediate level waste in nuclear cemeteries.

The industry does not skimp on the use of all possible logical means to minimize the risks and costs of dispersing these particles. However, this technique has not yet been used to attract and fix dispersed radioactive particles.

There is currently no literature reference describing the coating of tools with a thin film of polymeric material that attracts and binds radioactive particles to:
1. Protect the worker from radioactive particles by using the tool as a PPE.
2. Protect the tool from radioactive particles contamination
3. Avoid the risk of dispersion of radioactive contamination.
4. Reduce the volume of radioactive waste by attracting and fixing radioactive particles to its structure.
To date, what is being done is to protect the worker with the current PPE and decontaminate the tool and objects once used, given the risk of radioactive contamination that may arise. This entails clearly undesirable costs, as a large part of the volume of radioactive waste is made up of cleaning rags and sometimes these are expensive tools that are contaminated if they have not been decontaminated using current techniques. Thus, the cost of decontamination and storage of radioactive material is very high, which implies a significant investment in permanent storage infrastructures.

### DESCRIPTION OF THE INVENTION

The recommended procedure fills the technical vacuum previously exposed, so that it consists of subjecting the tools or other objects to a surface coating with a thin film formed from solutions of polymeric materials and additives, which when transformed form a coating of ultra-porous structure ideal for attracting and permanently fixing between the fibers and pores of this structure to radioactive particles that can be found contaminating the hands of the operator or the equipment he handles during the execution of his work in areas at risk of removable contamination by dispersed radioactive particles.
To carry out the application of this coating based on polymer nanomaterials, processes known in other fields of application can be used, such as spraying, spray-drying, atomizing, electro-stretching, electrospraying, blow-moulding, electrospinning and electrospraying and blow-spinning or blow-spraying respectively, provided that an ultraporous thin film is obtained, consisting of micro and nanofibers of a polymeric material capable of attracting and permanently fixing the radioactive particles.

Preferably, the method of coating application is based on electro-stretching (electrospinning) and blow-spinning techniques or their combination in electro-blow spinning, used for the formation of coatings of controlled morphology that form a structure of ultraporous material. These can be formed from solutions, simply by means of the correct adjustment of the process parameters and/or by means of the variation of the properties of the solution through the addition of suitable additives.

These techniques are simple and highly versatile methods for obtaining these thin films of ultraporous structure capable of attracting and fixing radioactive particles between their pores.

More specifically, using the electro-stretching technique, the desired nanofibers are formed by the action of an external electric field applied between two electrodes of a fluid pressure flow and to which the polymer solution is subjected. The electro-stretching technique has been widely used to generate nanofiber structures in many different fields such as medicine or food technology.

On the other hand, the technique of stretching by blowing or spraying is based on the application of a pressurized gas at high speed to generate micro and nanofiber structures. With this technique, and starting from solutions, the fibers are formed simply by means of the correct adjustment of the parameters of the process and/or by means of the variation of the properties of the solution through the addition of suitable additives and variation of their percentages.

As described above, the combination of both techniques is equally possible, so that the structures obtained by these techniques can be modified by adjusting the process parameters and, in certain cases, the variation in dissolution properties.

Although, as indicated above, a wide range of equipment can be used to carry out the invention process, the preferred option is to choose an installation by means of which it is possible to carry out both the blow-spinning technique and the electro-spinning technique or the simultaneous application of both techniques.

For this purpose, a compressed air circuit with its corresponding pressure regulator, which is connected in parallel via an injector or diffuser nozzle with an injection pump, is provided to inject the chosen polymer solution.

The nozzle is made up of two concentric outlet holes, in which the fluids are mixed with the ones to be processed at the outlet, to be projected onto a collector, where the tool to be treated is deposited.

The installation is complemented by a high voltage source to apply high electric fields to produce electrically charged fluids from polymer solutions, which when dried produce microfibers and/or nanofibers.

In this way, a disposable coating is obtained, capable of permanently fixing the free radioactive isotopes. In this way, the process of attracting and fixing the particles is carried out during the maintenance work, when the operator is working with contaminated hands, so that when handling the coated tools, the radioactive particles deposited on the operator's hands are fixed on the thin film that covers the tool. The free radioactive particle is fixed to this film, which is easily removed from the tool and forms an easily compressible and/or biodegradable residue, reducing the volume of radioactive waste as no decontamination of the tool is required.

### DESCRIPTION OF THE DRAWINGS

To complement the description below and in order to help a better understanding of the features of the invention, a set of plans are presented as an integral part of this description:
Figure 1.- Shows a representation corresponding to a schematic view of an installation for the implementation of the procedure for the treatment of tools susceptible to be exposed to radioactive particles carried out in accordance with the object of the present invention.

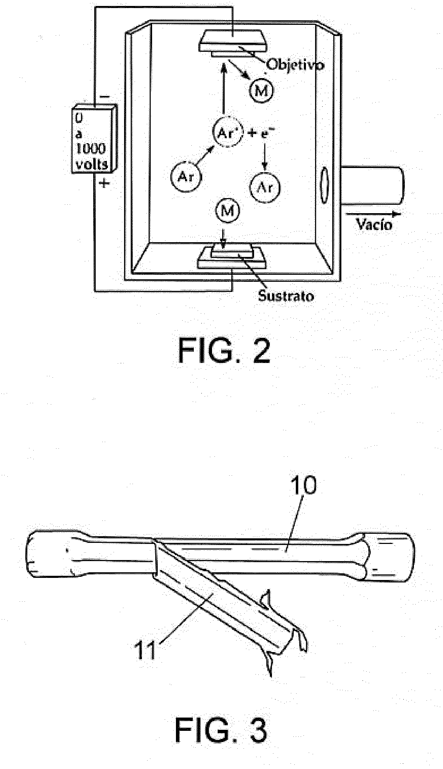

Figure 2.- Shows an illustration of an electronic depositing device. The high voltage applied to the gas produces the ionization of the Ar atoms. The Ar (+) ions accelerate towards the negatively charged target. When they collide, the ions release M atoms from the surface. M atoms travel with high kinetic energy; some of them collide with the target and form a thin film that covers the target to be treated.
Figure 3.- Shows a treated tool, which has been coated with a thin film of polymeric material, in the image you can see the simplicity of removing the coating where you can see the reduced amount of waste generated.

### PREFERENTIAL REALIZATION OF THE INVENTION

As mentioned above, the procedure of the invention consists in the coating of the tool, part or equipment in question on the basis of solutions of polymeric materials with additives to form fibrillar structures with electrostatic charges in order to attract and fix the radioactive particles to which they may be exposed between the fibers. This coating can be carried out by a wide variety of techniques known in completely different fields of application, so that it has been proven experimentally that the most suitable technique for small objects is the combination of electro-spinning and blow-spinning.

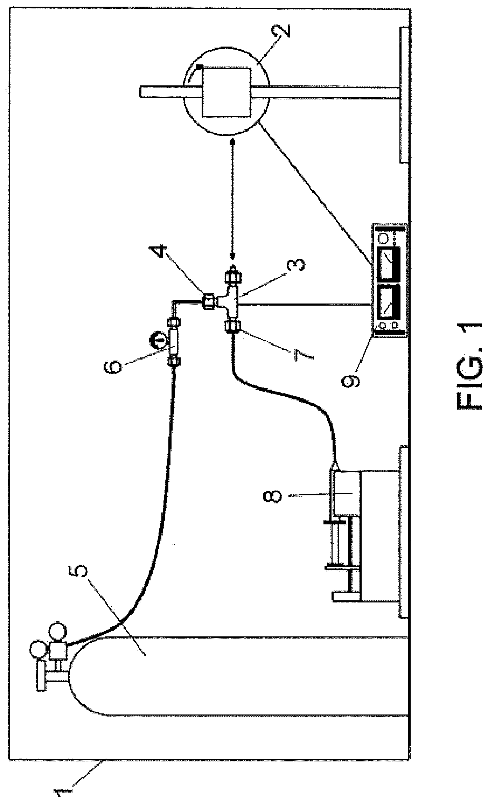

To this end, and in accordance with figure 1, an installation is planned in which a horizontal flow cabin (1) is involved. The laminar air outlet flow provides a clean working area with the laminar air flow in the direction of fiber formation, with air extraction and filtration of waste generated during the process.

In this cabin there is a collector (2), materialized in this case in an articulated arm that supports and fixes the tool to be covered.

A diffuser (3), consisting of two concentric needles, is available at a suitable distance. It is used to mix the two fluids used in the work by incorporating a connection port (4) for a compressed air circuit (5), with its corresponding pressure regulator (6), and a second port (7) for connection to an injection pump (8).

In the example of the chosen design, the pneumatic circuit is a compressor with an airflow of 50 l/min and a working pressure of 10 bar, although the characteristics of this equipment may vary according to the specific needs of each case without affecting the essence of the invention.

On the other hand, the injection pump (8) is used to provide the desired flow rate of polymer solution, in which the features of the syringe are introduced, obtaining the desired feed rate for the controlled injection of the solution.

At the same time, the inclusion of a high voltage source (9) using technology based on the application of high electric fields to produce fluids has been planned electrically charged from viscoelastic polymer solutions, which when dried produce micro and/or nanofibers.

The inner needle of the diffuser (3), with an internal diameter of 0.9mm, is used for the circulation of the polymer solution, while the outer needle of 1.4mm is used for the circulation of compressed air which, when mixed with the polymer solution, provides the necessary energy for the formation of the fibers, so that when the air expands, the solvent evaporates, transforming the solution into fibers which form a thin film with a fibrillar structure that covers the surface of the object.

From this diffuser it is possible to direct the flow of air with fibers towards the desired object, so that they adhere to the material by direct contact with it, which when superimposed form the coating that will attract and fix free isotopes in the tool.
From the structure described above, the operation is as follows:
- Select the raw material that will form the polymer solution; study the working conditions of the tool and define the desired features of the coating for the choice of raw material and additives, such as the size of the fibers or pores of the structure; the electrostatic, chemical or mechanical properties of the material, such as: indissolubility, hardness, elasticity, biodegradability, conductivity, insulation, among others.

In a preferred, but not limited, application, the solvent is selected from water, chloroform or polar solvents as alcohols or mixtures of alcohols.
- Prepare the polymer solution with the selected materials, additives and solvents and place this solution in a 5 to 20 ml syringe.
- Switch on the hood air extraction and filtering unit (1) and insert the units into the cabin.
- Place the syringe in the injection pump (8) adjusting the injection parameters of the fluid, preferably between 0.1 and 20 ml/h.
- Place the collector (2) with a pilot object to adjust the unit to the optimum distance for the package. The distance is decided depending on the volume of the object to be encapsulated and the flow rate of air and fluid made of polymeric material. This should preferably be between 2 and 50 cm. Increase or decrease the separation by looking for the optimal distance for the formation of the fibril structure.
- Adjust the air pressure by means of the regulator (6) to obtain the desired outlet velocity at the diffuser, set this preferably between 5 and 12 bar, the air pressure directly influences the outlet velocity of the diffuser, the pressure affects the outlet velocity of the air preferably between 30 and 300 m/s,
- Place the high voltage equipment (9) by connecting the positive pole at the tip of the diffuser and the negative pole at the collector, the electro-stretching can be done by applying voltages between 0.1 and 1000 kV, preferably between 10 and 30 kV.
- Start the object coating process by giving the injection pump the command to advance (8), observe the formation of fibers and their evolution during the coating of the object, modify the parameters of the machine according to their possible variables, increasing or decreasing the voltage, pressure or distance according to the material flow and the formation of the fibers and the desired structure.
- Once the desired structure has been obtained and all the parameters have been set, stop the injection pump (8) and switch off the high voltage equipment (9).
- Change the pilot object and fix the tool (10) to be coated on the collector (2).
- Switch on the high voltage equipment (9) and activate the injection pump advance (8) and cover the tool in its entirety by changing its position to cover its surface in several phases if necessary switching the equipment on and off in the order established by the procedure.
- Once the coating has been applied to all the desired parts of the tool, disconnect the equipment and remove it carefully.
- Hand over the treated tools to the technician for use in areas at risk of removable radioactive particle contamination.
- The worker will use these tools coated with the polymeric material in the same way as with an untreated tool except that they should not be reused in other areas so as not to increase the radiation dose to his hands by increasing the amount of particles fixed to the coating.
- Once the work has been completed, hand the tools over to the decontamination technician so that the residue forming the coating can be removed and the tool can leave the controlled area of the nuclear power plant clean. If the material that forms the coating becomes contaminated it must be managed as radioactive material.

However, as mentioned above, for other objects or equipment, and depending on the situation in which they are found, the techniques of stretching by blowing, electroshocking, spraying, spray-drying or atomising will be used.

## Claims

1. Procedure for the treatment of tools susceptible to being exposed to removable radioactive particles, **characterized by** the fact that it consists of coating the tool, part or equipment in question with a thin film of polymeric material of fibrillar or ultraporous structure with electrostatic properties, capable of attracting and fixing the free radioactive particles to which they may be exposed between the fibers or pores of their structure.

2. Procedure for the treatment of tools susceptible to being exposed to removable radioactive particles, according to claim 1, **characterized by** the fact that the process of coating the part to be protected with the absorbent porous material of radioactive particles is carried out by any of the following processes of coating objects or combination of any of them: spraying, spray drying, atomizing, electrospinning, electrospraying, blow-spinning, spraying by blowing or similar.

3. Procedure for the treatment of tools susceptible of being exposed to removable radioactive particles, according to claim 1, **characterized by** the fact that to obtain the coating of polymeric material with ultraporous fibril structure, polymer solutions such as PVOH (polyvinyl alcohol) are used, PCL (Polycaprolactone), PHAs (Polyhydroxylalkanoates), PHB (Polyhydroxylbutylate) or similar with or without additives that vary their properties as plasticisers, crosslinkers or similar, using water as solvent, or polar solvents such as chloroform, alcohol or similar.

4. Procedure for the treatment of tools susceptible of being exposed to removable radioactive particles, according to Claim 1, characterized because to obtain coatings that generate the minimum volume of waste possible, biodegradable polymer-based solutions are used as PLA (Polylactic Acid), PHB (Polyhydroxylburite) or similar and / or plasticizing additives are added to facilitate the compression of the material, such as DOA (Dioctyladipate) or similar.

5. Procedure for the treatment of tools susceptible of being exposed to removable radioactive particles, according to Claim 1 so that to obtain electrostatically charged coatings, polymer solutions with electrostatic properties such as PLA or similar are used and/or electrostatically charged elements are added, such as electrostatically charged copper particles or similar to obtain forces to attract the radioactive particles near the coating.

6. Installation for the implementation of the procedure of the above claims, **characterized by** the fact that it is made up of compressed air equipment (5) with its corresponding pressure regulator (6), which is connected in parallel through an injector or diffuser nozzle (3) with an injection pump (8), in which the chosen polymer solution is arranged, having provided that the nozzle is made up of two concentric outlet holes, in which the fluids with which it works are mixed at the outlet, to be projected onto a collector (2), in which the tool to be treated is deposited, with the particularity that it includes a high voltage source (9), connectable between the nozzle and the collector to apply electrical fields in order to obtain microfibers and/or nanofibers in the coating applied.
